# EUROPEAN PATENT APPLICATION

(11) **EP 4 481 560 A1**
(43) Date of publication of application: **25.12.2024**
(21) Application number: 24183225.2
(22) Date of filing: 19.06.2024
(51) Int. Cl.: G06F 8/74, G06F 8/73, G06N 20/00

(54) **METHODS AND SYSTEMS FOR GENERATING DESCRIPTION FOR ASSEMBLY FUNCTIONS**

(30) Priority: 21.06.2023 US 202318339139
(71) Applicant: BlackBerry Limited, Waterloo, Ontario N2K 0A7 (CA)
(72) Inventor: YUKI, Jesia Quader, Montreal, QC H3A 1X1 (CA); AMOUEI, Mohammadhossein, Montreal, QC H3A 1X1 (CA); FUNG, Benjamin Chin Ming, Montreal, QC H3A 1X1 (CA)
(74) Representative: MERH-IP Matias Erny Reichl Hoffmann Patentanwälte PartG mbB

(57) **Abstract**

A method for creating a model to add a code summary to functions of assembly language code, the method including tokenizing an assembly code dataset; inputting the tokenized assembly code dataset to a pre-trained transformer-based model; using an encoder to create fixed length embeddings; and using a decoder on the fixed length embeddings to generate the code summary.

## Description

### FIELD OF THE DISCLOSURE

The present disclosure relates to software reverse engineering, and in particular relates to software reverse engineering for assembly code.

### BACKGROUND

The background description includes information that may be useful in understanding the present inventive subject matter. It is not an admission that any of the information provided herein is prior art or applicant admitted prior art, or relevant to the presently claimed inventive subject matter, or that any publication specifically or implicitly referenced is prior art or applicant admitted prior art.

Reverse engineering refers to the process of analyzing an existing software system to understand its functionality, design, and implementation details. This technique involves examining the software code, system behavior, and dependencies to create a representation of the system's architecture and functionality. It is often used to update or improve existing systems, create documentation, or build new software applications compatible with the original system. Reverse engineering can also help to detect malicious software or potential vulnerabilities.

A valuable tool for reverse engineering is code summarization. It is also known as code comment and concerns generating a concise and informative summary of a software code's functionality or behavior. Code summarization techniques may use natural language processing and machine learning algorithms to analyze the code's syntax, structure, and comments to generate a human-readable and easy to understand summary. The generated summary can provide a quick overview of the code's functionality, identify potential flaws, and help reverse engineers quickly understand the functionality and behavior of a large and complex software codebase.

Over the past few years, a growing effort has been made toward proposing code summarization techniques, specifically targeting software source code. However, software source code may not always be available to reverse engineers for several reasons, such as the code being proprietary. Additionally, the code may be lost or corrupted, making it impossible to analyze it directly.

### BRIEF DESCRIPTION OF THE DRAWINGS

The present disclosure will be better understood having regard to the drawings in which:
**Figure 1** is a process diagram showing a process for associating comments with assembly code.
**Figure 2** is a block diagram showing code segments and associated comments in a dataset.
**Figure 3** is a block diagram showing the creation of tokens from a dataset.
**Figure 4** is a block diagram showing the encoding of tokens to create fixed length contextual embeddings, and decoding to create comments for code segments.
**Figure 5** is a block diagram of a simplified computing device for performing the methods disclosed herein.

### DETAILED DESCRIPTION OF THE DRAWINGS

In some embodiments the present disclosure provides a method for creating a model to add a code summary to functions of assembly language code, the method comprising: tokenizing an assembly code dataset; inputting the tokenized assembly code dataset to a pre-trained transformer-based model; using an encoder to create fixed length embeddings; and using a decoder on the fixed length embeddings to generate the code summary.

In some embodiments, the present disclosure provides a computing device configured for creating a model to add a code summary to functions of assembly language code, the computing device comprising: a processor; and memory, wherein the computing device is configured to: tokenize an assembly code dataset; input the tokenized assembly code dataset to a pre-trained transformer-based model; use an encoder to create fixed length embeddings; and use a decoder on the fixed length embeddings to generate the code summary.

In some embodiments, the present disclosure provides a computer readable medium for storing instruction code, which, when executed by a processor of a computing device configured for creating a model to add a code summary to functions of assembly language code, cause the computing device to: tokenize an assembly code dataset; input the tokenized assembly code dataset to a pre-trained transformer-based model; use an encoder to create fixed length embeddings; and use a decoder on the fixed length embeddings to generate the code summary.

The present disclosure is directed to assembly code summarization. Such assembly code summarization may be necessary in cases where source code for the software program is unavailable.

Specifically, source code provides high level information that is more human readable. Conversely, binary code loses information during compilation, and it is therefore much harder to summarize. Moreover, the absence of the original source code is a practical problem under many circumstances, such as third party or off the shelf programs. Binary code may be analyzed as assembly code, a form of intermediate representation that provides human readable content. Assembly code contains instructions that provides some semantics and structures of the program.

Understanding assembly code can be more complicated than high-level programming languages for several reasons. Assembly code is a low-level language consisting of complex instructions that can be challenging to read and understand. It typically lacks the abstraction and structure found in high-level programming languages, making it harder to identify program flow and comprehend the code's overall purpose. As a result of the unavailability of source code and the complexity of assembly code, there may be a greater need for automatic assembly code summarization than high-level code.

Therefore, in accordance with the embodiments of the present disclosure, methods and system are provided for transfer learning for assembly code summarization. In particular, in some embodiments a curated dataset may be created, and fine-tuned, pre-trained Bidirectional Encoder Representations from Transformers (BERT) models used. BERT is a machine learning framework for Natural Language Processing (NLP) that can help computers understand the meaning of ambiguous language in text by finding context using surrounding text. Transformers are a deep learning model in which every output element is connected to every input element with dynamic weightings between them.

The present disclosure expands on text summarization, translation, dialog generation and grammar, and code summarization, each of which is described below.

### Text Summarization

Text summarization comprises condensing a piece of text to a shorter version while keeping key informational elements. A goal is to produce a summary in a concise form that accurately represents the content of the original text. For example, K. Sarkar, "Automatic single document text summarization using key concepts in documents," J. Inf. Process. Syst, vol. 9, pp. 602-620*,* the contents of which are incorporated by reference, proposes a method of summarizing a document by extracting its main concepts. This approach aims to provide an overall understanding of the content of a document.

Similarly, in the paper H. Christian, M. P. Agus, and D. Suhartono, "Single document automatic text summarization using term frequency-inverse document frequency (tf idf)," ComTech: Computer, Mathematics and Engineering Applications, vol. 7, p. 285, 2016*,* the contents of which are incorporated herein by reference, the authors create an automatic text summarizer using the TF-IDF algorithm. The TF-IDF algorithm measures the importance of each word in a document, and the words with the highest TF-IDF scores are used to construct the summary.

In another example, P. Verma and H. Cm, "Mcrmr: Maximum coverage and relevancy with minimal redundancy based multi-document summarization," Expert Systems with Applications, vol. 120, 2018*,* the contents of which are incorporated herein by reference, the paper presents a technique for extracting multi-document summaries based on Shark Smell Optimization (SSO). The approach is based on graph-based optimization and aims to produce summaries that are concise and coherent.

Further, in Y. Liu and M. Lapata, "Text summarization with pretrained encoders," 2019*,* the contents of which are incorporated herein by reference, the authors apply BERT to the task of summarization and show that it can perform well on both extractive and abstractive summarization tasks.

In another example, A. Gupta, D. Chugh, Anjum, and R. Katarya, "Automated news summarization using transformers," pp. 249-259, 2022*,* the contents of which are incorporated herein by reference, the authors apply various pre-trained models such as BERT, GPT, and RoBERTa for text summarization.

Thus, text summarization aims to provide a concise summary of the original text while capturing key elements.

### Translation

The use of encoder-decoder models has been widely adopted in neural machine translation. Researchers have, for example, applied these models in the translation of English to French, as described in I. Sutskever, O. Vinyals, and Q. V. Le, "Sequence to sequence learning with neural networks," Advances in Neural Information Processing Systems, vol. 4, p. 3104-3112, 2014 and *in* K. Cho et al., "Learning phrase representations using rnn encoder-decoder for statistical machine translation," 2014*,* the contents of both of which are incorporated herein by reference.

The basic encoder-decoder for the English-to-French translation task was further expanded in D. Bahdanau et al., "Neural machine translation by jointly learning to align and translate," ArXiv, vol. 1409, 2014*,* the contents of which are incorporated herein by reference.

Additionally, a Scalable Transformers model was introduced, and its effectiveness was demonstrated in translating from English to German and English to French in P. Gao et al, "Scalable transformers for neural machine translation," 2021*,* the contents of which are incorporated herein by reference.

### Dialogue Generation and Grammar

In the field of artificial intelligence (AI), a dialogue model is a system or algorithm designed to engage in conversational exchanges with humans or other systems. It aims to simulate natural language interactions and generate appropriate responses based on the input it receives.

For example, DLGNet, a transformer-based model for dialogue modeling, was provided in O. O. Olabiyi, et al., "Dlgnettask: An end-to-end neural network framework for modeling multiturn multi-domain task-oriented dialogue," In Proceedings of the 2nd Workshop on Natural Language Processing for Conversational AI, 2020*,* the contents of which are incorporated herein by reference.

In another example, the document M. Lee, et al., "Korean grammatical error correction based on transformer with copying mechanisms and grammatical noise implantation methods," Sensors, vol. 21, p. 2658, 2021*,* the contents of which are incorporated herein by reference, uses a Transformer with Copying Mechanism that outperformed two commercial grammar checks and other Neural Machine Translation (NMT)-based models.

The document Y. Cao et al., "Pretrained language models for dialogue generation with multiple input sources," pp. 909-917, 2020*,* the contents of which are incorporated herein by reference, investigates dialogue models with numerous input sources modified from the pretrained language model GPT2. The document evaluates several strategies for fusing various different sources of attention information. The experimental results reveal that correct fusion procedures outperform simple fusion baselines in terms of relevance with dialogue history.

Dialogue models can also be used for pairing comments with code. For example, some advanced pre-trained language models are described in J. Devlin et al., "Bert: Pretraining of deep bidirectional transformers for language understanding," In Proceedings of the 2019 Conference of the North American Chapter of the Association for Computational Linguistics: Human Language Technologies, p. 4171-4186, 2019*;* Z. Yang, et al., "XInet: Generalized autoregressive pre training for language understanding," In Advances in Neural Information Processing Systems, vol. 32, p. 5753-5763, 2019*.;* T. Brown, et al., "Language models are few-shot learners," In Advances in Neural Information Processing Systems, no. 33, p. 1877-1901, 2020*;* Y. Liu et al., "Text summarization with pretrained encoders," 2019*;* and Z. Feng et al., "Code-bert: A pre-trained model for programming and natural languages, " In Findings of the Association for Computational Linguistics: EMNLP 2020, p. 1536-1547, 2020*,* the contents of which are incorporated herein by reference. The models have been used with pairing comments with code, as for example described in H. Husain et al., "Codesearchnet challenge: Evaluating the state of semantic code search*."* and *Y. Liu et al, ibid.,* the contents of which are incorporated herein by reference.

Other researchers have been inspired to beat those state of art models and apply them in the task of code summarization or natural language-based code search, as for example described in A. V. M. Barone et al., "A parallel corpus of python functions and documentation strings for automated code documentation and code generation," In Proceedings of the Eighth International Joint Conference on Natural Language Processing, vol. 2, p. 314-319, 2021 and X. Gu et al., "Deep code search," In Proceedings of IEEE/ACM 40th International Conference on Software Engineering (ICSE), p. 933-944, 2018*,* the contents of which are incorporated herein by reference.

This work is quite often inspired by a practical urge to assist software developers. For example, CodeBERT, described by *Z*. *Feng et al, ibid,* is one of the first language models that has been demonstrated to be particularly effective for training on data consisting of both natural language (NL) and programming language (PL) sequences at the same time.

### Code Summarization

Code summarization is the process of generating readable summaries of code that accurately describe the task of a segment or piece of software.

Examples of code summarization include S. Iyer et al., "Summarizing source code using a neural attention model," In Proceedings of the 54th Annual Meeting of the Association for Computational Linguistics, vol. 1, p. 2073-2083, 2016*,* the contents of which are incorporated herein by reference, which presents CODE-NN, a method that uses Long Short Term Memory (LSTM) and an attention procedure to generate summaries of C# code snippets and Structured Query Language (SQL) queries.

In another example, X. Hu et al., "Summarizing source code with transferred api knowledge," In Proceedings of the Twenty-Seventh International Joint Conference on Artificial Intelligence Main track, pp. 2269-2275, 2018*,* the contents of which are incorporated herein by reference, presents DeepCom, a model that learns from a huge code corpus and creates comments based on learned characteristics using natural language processing approaches.

These references then apply Recurrent Neural Networks (RNN) and LSTM to examine the structural information of Java methods in order to generate better comments.

In a further example, X. Hu et al., "Deep code comment generation" In Proceedings of the 26th Conference on Program Comprehension, p. 200-210, 2018*,* the contents of which are incorporated herein by reference, develops TL-CodeSum, an RNN-based model that effectively uses Application Programming Interface (API) knowledge in conjunction with source code to generate code summarization.

In another example, M. Allamanis et al., "A convolutional attention network for extreme summarization of source code", In Proceedings of the International Conference on Machine Learning, p. 2091-2100, 2016*,* the contents of which are incorporated herein by reference, presents a convolutional attentional network which effectively performs extreme summarization based on the source code provided, where 'extreme' denotes producing extremely brief messages.

In further examples, A. LeClair et al., "A neural model for generating natural language summaries of program subroutines", In Proceedings of the 41st International Conference on Software Engineering, p. 795-806, 2019 uses an attentional GRU encoder-decoder model to produce summaries for code; and *W.* U. Ahmad et al., "A transformer-based approach for source code summarization", In Proceedings of the 58th Annual Meeting of the Association for Computational Linguistics, p. 4998-5007, 2020 shows that relative encoding significantly enhances summarization efficiency by using Transformer to generate a comprehensible summary that represents the functionality of a program. The contents of both are incorporated herein by reference.

U. Kusupati et al, "Natural language to code using transformers", 2022*,* the contents of which are incorporated herein by reference, uses the CoNaLa dataset to produce code snippets from natural language descriptions, applying the self-attention-based transformer architecture. PYMT5, the PYTHON method text-to-text transfer transformer, is introduced in C. Clement et al., "Pymt5: Multimode translation of natural language and python code with transformers," In Proceedings of the 2020 Conference on Empirical Methods in Natural Language Processing, 2020*,* the contents of which are incorporated herein by reference. This paper provides a model which can both predict entire methods from natural language documentation strings (docstrings) as well as summarize code into docstrings of any common style. R. Wang et al., "Fret: Functional reinforced transformer with BERT for code summarization," IEEE Access, 2020*,* the contents of which are incorporated herein by reference, introduces FRET which combines a Transformer with BERT in order to provide more accurate summaries of the functions of the code. *Wang et al.* presents a reinforcer for learning its functional contents.

### Assembly Document Generation (AsmDocGen)

Contrary to the above references, the embodiments of the present disclosure focus on generating comments that summarize the functionality of assembly code, which has received very little attention previously. Assembly code can be particularly challenging to comprehend due to its high complexity and lack of high-level abstractions. Additionally, the absence of a comprehensive and well-curated dataset has made it difficult to train machine learning and deep learning models for assembly code summarization. To overcome this obstacle, a carefully curated dataset of assembly function comment pairs was created.

In practice, a limited sized dataset was created. In some embodiments therefore, the training of large NLP models from scratch may not be feasible, and transfer learning is therefore possible.

The methods and systems described herein may allow significant reduction in the time spent by reverse engineers in understanding code, thus contributing to the field of code summarization.

Therefore, in accordance with the embodiments of the present disclosure, methods and systems entitled herein "AsmDocGen" are provided, which comprise a fine-tuned CodeBert that generates human-readable comments for assembly functions. AsmDocGen can significantly help reverse engineers and other experts who work with low-level code by providing clear and concise descriptions of assembly functions, streamlining the reverse engineering process and improving understanding of the underlying code.

The method involves the use of a dataset. In one embodiment, handpicked well-curated assembly function comment pairs were used to create a dataset. This embodiment ensured high-quality comments and accurate matching between functions and their corresponding comments, as many functions lacked comments or had unclear or irrelevant comments. The resulting dataset may further provide a valuable resource for future research on assembly code summarization. However, other datasets could in some cases be used with the embodiments of the present disclosure.

Further, in some embodiments, transfer learning may be used for assembly code summarization by comparing various pre-trained natural language processing (NLP) models. In particular, the embodiments of the present disclosure explore how pre-trained NLP models can be fine-tuned for the specific task of summarizing assembly code, leveraging their existing knowledge and experience with natural language processing tasks. By comparing the performance of different pre-trained NLP models, identification of which models are most effective for transfer learning in this context may be achieved, providing insight into how best to utilize pre-trained models for this specific task.

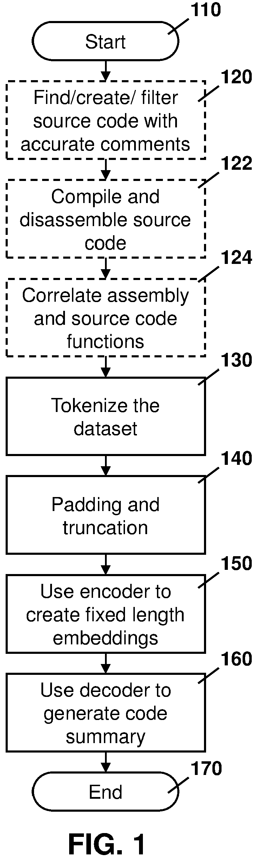

Reference is now made to **Figure 1****,** which shows a process for providing comments for assembly language code. In particular, the process of **Figure 1** starts at block **110** and proceeds to blocks **120, 122** and **124** in which an optional step of creating a dataset may occur.

In one embodiment, the creation of the dataset may involve the matching of source code with comments at block **120.** For example, the inventors in the present disclosure used a diverse range of C and C++ source code samples from well-known online sources such as GitHub^{™}, Codeforces^{™}, StackOverflow^{™}, HackerRank^{™}, and Codechef^{™} for such curation. After collecting the source code samples, each file was examined to ensure correct matching between functions and their corresponding comment. During the matching process, many unexplained functions were found, and among those with comments, many comments suffered from poor quality. Thus, low-quality comments were eliminated. The characteristics of those comments classified as poor quality included, but were not limited to: stating the obvious without providing additional insights or details about the functionality; being obsolete and not corresponding to the current version of the code; being overly wordy or containing excessively technical language; having grammatical mistakes; containing irrelevant information; being unclear or ambiguous; and/or being misleading or incorrect.

Once the source code comment pairs are found at block **120,** the process proceeds to block **122** in which the source code with accurate comments is compiled and disassembled. For example, compiling may involve use of a GNU Compiler Collection (GCC) compiler in one embodiment. However, any compiler may be used. Compiling creates a binary executable. A disassembler may then be applied, where a disassembler turns the binary executable machine code to assembly code. Any disassembler may be used, and one example includes IDA Pro^{™}.

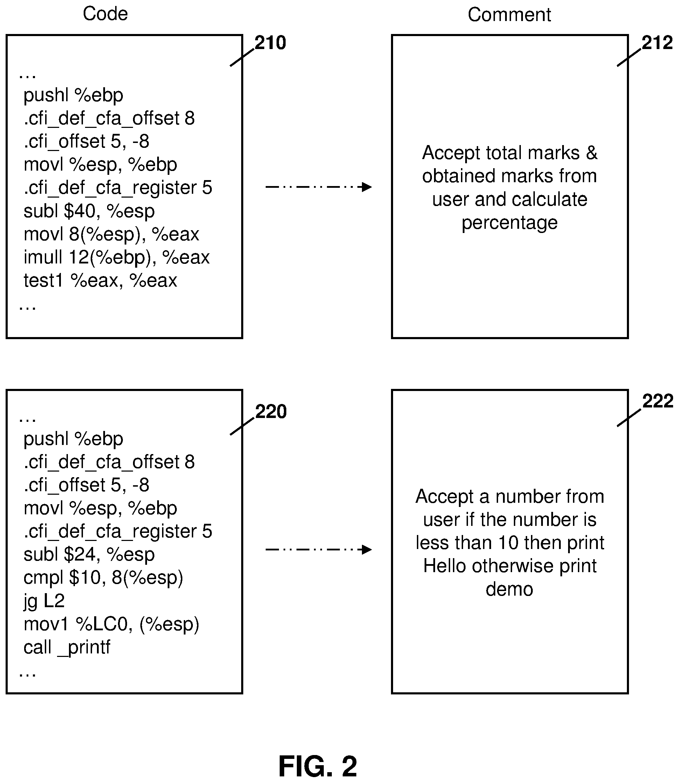

The process then proceeds to block **124** in which correlation of assembly functions with their corresponding source code functions is performed to identify the relevant comments. For example, reference is made to **Figure 2****,** which shows an excerpt of a dataset. In particular, in **Figure 2****,** assembly code snippet **210** is correlated with comment **212.** Similarly, assembly code snippet **220** is correlated with comment **222.**

The process may then proceed from block **124** to block **130,** where the process for using the dataset to train a BERT model may be started. As will be appreciated by those in the art, the steps of creating a dataset at blocks **120, 122** and **124** are optional, and in some cases a dataset may already exist. In this case, the process may proceed from block **110** directly to block **130.**

As provided below, starting at block **130** the dataset is used to train a BERT model. In particular, in one aspect experimentation was used to determine whether CodeBERT can learn to represent assembly language. CodeBERT, as described in *Feng et al,. ibid,* has been trained on various programming languages, making it adept at understanding code structure and function. Thus, it was hypothesized that CodeBERT's ability to capture semantic representations for natural and programming languages is advantageous for understanding assembly code's unique grammar for assembly code summarization. However, other NLP models were tested, as described below, to compare their outcomes with CodeBERT.

CodeBERT is a state-of-the-art pre-trained language model based on the Transformer architecture, which has demonstrated impressive performance on various natural language and programming language tasks. It has been trained on a vast corpus of English words and source code, including Python, Java, and C++, making it one of the most versatile pre-trained models available. CodeBERT's flexibility stems from its ability to capture both syntactic and semantic information from natural language and programming language inputs.

CodeBERT's training objectives include Masked Language Modeling (MLM) and Replaced Token Detection (RTD). MLM involves masking parts of the text at random and requesting the model to predict them, while RTD involves replacing tokens in the text with plausible alternatives and having the model determine which tokens have been replaced.

This approach improves the model's robustness by allowing it to handle variations in the input data. In addition to MLM and RTD, CodeBERT includes a Cross-Lingual Language Model (XLM) objective, which enables it to learn cross-lingual representations by jointly training on monolingual and parallel data. This feature makes CodeBERT particularly useful for natural language processing tasks involving multilingual inputs.

Thus, CodeBERT is used in one embodiment as the BERT model for several reasons. Firstly, CodeBERT is a pre-trained language model that has demonstrated outstanding performance on various natural language and programming language tasks. Its pre-training on a large corpus of English words and programming languages enables it to capture syntactic and semantic information from input data, making it a more effective choice for training on small datasets than training models from scratch.

Secondly, CodeBERT has the ability to adapt beyond its pretrained data, as for example demonstrated by G. Zhou et al., "Named entity recognition using an hmm-based chunk tagger", proceedings of the 40th Annual Meeting on Association for Computational Linguistics, 10 2002, the contents of which are incorporated herein by reference. This ability makes CodeBERT a more robust and adaptable model, enabling it to perform well on new tasks and domains.

Lastly, the semantic representations learned by CodeBERT are particularly beneficial for understanding assembly code. Assembly code has a unique grammar for constructing instructions and linking operations and operands. CodeBERT's ability to capture these structures and their relationships makes it an effective tool for generating accurate comment representations.

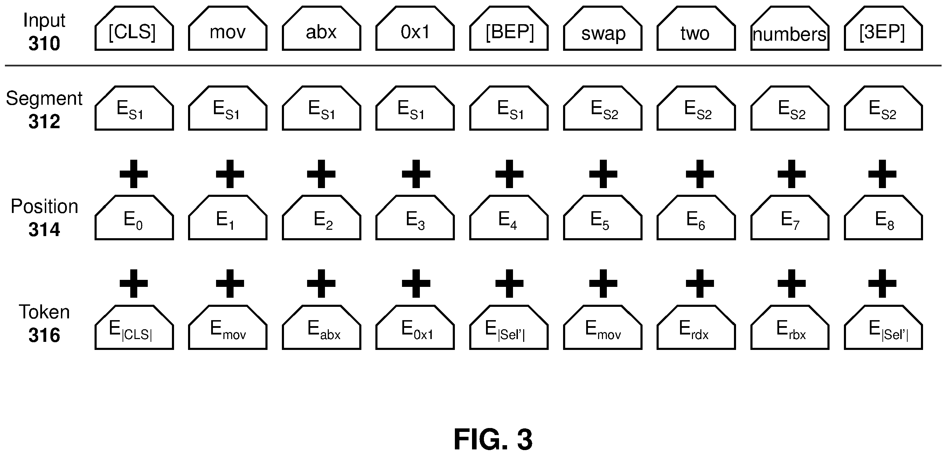

Reference is now made to **Figure 3****.** CodeBERT is based on the transformer architecture, similar to the original BERT model. It has a multi-layer transformer encoder, which takes the input **310** as code and comments.

To tokenize the input, CodeBERT uses the WordPiece tokenization method for both the code and the comments, as for example described in Y. Wu, M. et al., "Google's neural machine translation system: Bridging the gap between human and machine translation," 2016*,* the contents of which are incorporated herein by reference. The input to the model consists of a sequence of tokens, which are the individual words and symbols of the code and comments.

In the pre-training phase, the input is set as the concatenation of two segments with special separator tokens. The input format is [CLS], *w*₁, *w*₂*,* ..., *wₙ*, [SEP], *c*₁, *c*₂, ..., *cₘ*, [EOS], where [CLS] is added to the start of each sentence to capture the sentence representation. The [SEP] token separates the code and comment tokens, making it easier for BERT to understand that the input is made up of two parts - code and comments. [EOS] token is used to indicate the end of a sentence.

The input tokens are passed through an embedding layer, where they are transformed into numerical vectors that capture the meaning of the tokens. These tokens are then combined with three other types of embeddings to form a single input vector for the model. The three types of embedding include segmentation embeddings **312,** position embedding **314** and token embeddings **316.** **Figure 3** demonstrates how the tokens are passed through various embedding layers to form a single input vector.

The role of these three types of embedding involves the following. Segmentation embeddings **312** are used to differentiate between distinct lines of code.

Position embeddings **314** show the position of each token inside the line of code.

Token embeddings **316** refer to the semantics of each token.

CodeBERT is pre-trained on a dataset of code and comment pairs using masked language modelling and replaced token detection objectives. The training process involves two neural networks, a generator G and a discriminator D. The encoder of both networks, usually a transformer network, converts a sequence of embedding tokens *x* = [*x*₁*,* ..., *xₙ*] into a sequence of contextualized vector representations *h*(*x*) = [*h*₁*,* ..., *hₙ*]. These embeddings are then passed through the transformer encoder, which consists of multiple layers of self-attention and feed-forward neural networks.

The self-attention layers enable the model to focus on distinct segments of the input sequence, while the feed-forward layers help the model acquire a deeper understanding of the relationships between the individual tokens.

The final output of the transformer encoder is a set of embeddings for each token in the input sequence, which capture the meaning of the code and comments in a fixed-length vector representation. These embeddings are then used to train the model for code summarization tasks.

In general, the overall structure of CodeBERT for code summarization is an encoder-decoder structure, where the encoder is the transformer-based neural network and the decoder is the task-specific network that generates the summary of the code based on the encoded representation.

However, the use of CodeBERT in the present disclosure is not limiting, and any pre-trained transformer based model could be used for the methods and systems described herein. The use of CodeBert is therefore provided for illustrative purposes only.

The methodology for developing the model to convert assembly code functions into natural language outputs involves several key steps.

Referring again to **Figure 1****,** as indicated by blocks **120, 122** and **124,** a data extraction is initially undertaken by collecting a comprehensive dataset of assembly code functions and their corresponding natural language descriptions. Data cleaning then occurs by eliminating incomplete or corrupted code snippets and comments to ensure that the model is trained using high-quality data. By performing these steps, the quality of the dataset may be enhanced.

After the dataset is created (or by using an existing clean dataset), the process then proceeds to block **130** in which the dataset may be tokenized. As used herein, tokenization is the conversion of inputs into tokens to input to a model. For example, in natural language processing, the word "snow" may be its own token, whereas "snowing" may be tokenized to "snow" and "##ing" and "snowboard" may be tokenized to "snow" and "##board".

In one example, the dataset may be tokenized using the WordPiece algorithm, which is well-suited for tokenizing both natural language and code. This is for example described in *X*. *Gu et al., ibid.* Assembly language has its own unique syntax and vocabulary. WordPiece enables the encoding of any unusual words in the lexicon with suitable subword tokens without requiring the addition of any "unknown" tokens. While WordPiece is one example of a tokenizer, other tokenizers may equally be used with the embodiments of the present disclosure, and WordPiece is provided for illustration only.

To maintain consistency in sentence length, the process proceeds from block **130** to block **140** in which padding and truncation techniques are used to generate sentences of a uniform length. For example, such length may be 100 tokens in some cases. The length may be determined in some cases by conducting experiments with varying sentence lengths and evaluating the trade-off between the model's accuracy and training time.

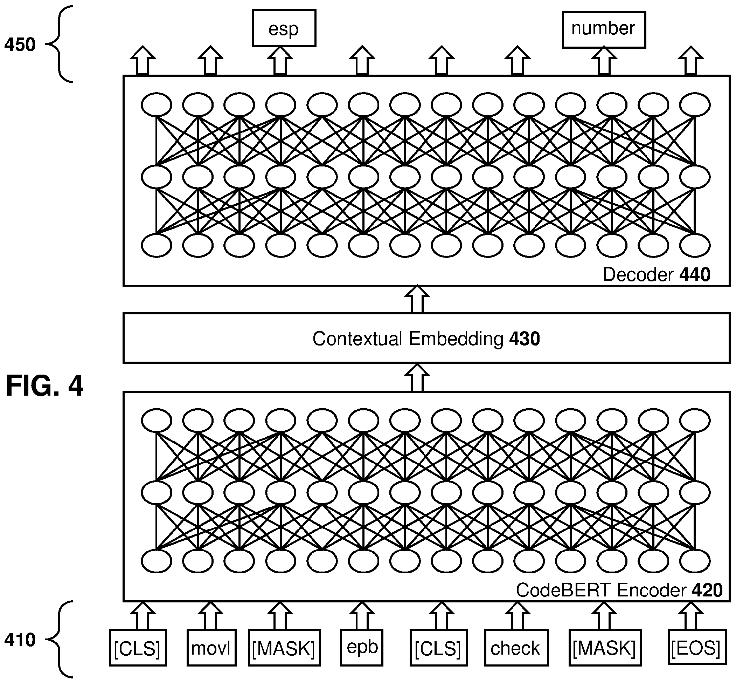

The process then proceeds to block **150** in which an encoder may be used to create fixed length embeddings. Specifically, referring to **Figure 4****,** tokenized words **410** may be passed through the encoder **420** (e.g. a codeBERT encoder) to produce fixed-length embeddings. These embeddings capture the meaning of the code and comments, creating a contextual vector representation for each token in the input sequence, shown as contextual embedding **430** in

### Figure 4.

This contextual vector is then passed to a decoder at block **160** of **Figure 1****,** and shown as decoder **440** in the embodiment of **Figure 4****,** to generate a code summary **450.**

From block **160** the process proceeds to block **170** and ends.

The process of **Figure 1** can be used for both training the model using a subset of the dataset, as well as testing the model, using another subset of the dataset.

### Experiment and Results

The approach of **Figures 1** to **4** was tested on four models using a dataset containing 5084 assembly function comment pairs.

In particular, the performance of the AsmDocGen model was compared to four leading NLP models, namely RoBERTa, BERT, DistilBERT and Transformer.

Transformer, introduced by Vaswani et al. (A. Vaswani et al., "Attention is all you need," In Advances in Neural Information Processing Systems, no. 30, p. 5998-6008,2017*,* the contents of which are incorporated herein by reference), is a neural network architecture that is based on the concept of self-attention, which allows the model to weigh the importance of different parts of the input sequence when generating output. The Transformer consists of an encoder and a decoder, each containing multiple layers of self-attention and feed-forward neural networks. Its use of self-attention allows the model to capture long-range dependencies more effectively than other NLP models, and parallelize computations across the input sequence, making it more computationally efficient. The Transformer has achieved state-of-the-art performance on a wide range of NLP tasks and has inspired the development of other Transformer-based models such as BERT.

BERT, introduced by *Devlin et al., ibid,* is an NLP model developed by Google^{™} in 2018. It is based on the transformer architecture and is pre-trained on a large corpus of unannotated text using a masked language modelling task and a next sentence prediction task. BERT can be fine-tuned on a variety of NLP tasks, achieving state-of-the-art performance on many benchmark NLP datasets with relatively small amounts of task-specific data. Its ability to handle a wide range of NLP tasks has made it a popular model for NLP research and applications.

RoBERTa, introduced by *Liu et al., ibid,* in 2019, is an NLP model that is based on the same architecture as BERT but with several modifications to its training process and hyperparameters. The model is trained on a much larger corpus of data, with up to 160 GB of text, and uses dynamic masking during pre-training. RoBERTa also changes the hyperparameters used in BERT, including removing the next sentence prediction task, increasing the batch size, and training the model for longer. Additionally, RoBERTa uses byte pair encoding for sub word tokenization, which can improve the model's ability to handle rare and out-of-vocabulary words. These modifications allow RoBERTa to achieve state-of-the-art performance on a wide range of NLP tasks.

DistilBERT, introduced by Sanh et al. (V. Sanh et al., "Distilbert, a distilled version of bert: smaller, faster, cheaper and lighter," 2019*,* the contents of which are incorporated herein by reference), is a compact and efficient version of the BERT model, created through a process called distillation. It has fewer parameters (40% less) than the BERT base model. DistilBERT is trained using knowledge distillation, where the knowledge of a larger model, in this case, BERT, is distilled into a smaller model. Despite its smaller size, DistilBERT achieves similar performance to the larger BERT model on many NLP tasks, while being faster and requiring less memory to train and run. It has become a popular choice for NLP tasks where computational resources are limited.

Further, for the testing, various hyperparameters were set. To generate code summaries, a sequence-to-sequence pipeline was utilized, where the encoder was initialized using CodeBERT, which comprises 12 layers, a maximum length of 512, an embedding size of 768, and 12 attention heads of size 64.

For the decoder, a randomly initialized Transformer with 6 layers, hidden states of 768 dimensions, and 12 attention heads were used.

To update the model parameters, the Adam optimizer was employed with a learning rate of 5e-5 and a batch size of 32. The hyperparameters were optimized, and early stopping was applied based on the validation dataset.

Using this setup, the various models were tested. Results of the testing are shown, for example, quantitatively in Table 1 below, which shows the Bilingual Evaluation Understudy (BLEU) score for the tests. In particular, BLEU is a metric used to evaluate the quality of the machine-generated text, such as machine translation or text summarization. It measures the similarity between the generated text and the reference text (usually human-generated) based on n-gram overlap. The higher the BLEU score, the better the machine-generated text matches the reference text. BLEU score ranges from 0 to 1, where a score of 1 indicates that the machine-generated text is identical to the reference text. BLEU score is commonly used in natural language processing research as a standard metric for evaluating the quality of the machine-generated text.

**TABLE 1: Comparison of BLEU scores between models**

| **Models** | **BLEU Score** |
|---|---|
| Transformer | 34.54 |
| RoBERTa | 50.01 |
| DistilBERT | 50.82 |
| BERT | 51.85 |
| Asm DocGen | 54.10 |

As seen from Table 1, for generating comments for assembly language, AsmDocGen outperforms the remaining models quantitatively. The results reveal that fine-tuning pre-trained models significantly outperforms training a model from scratch on a small dataset. This suggests that pre-trained models can capture relevant patterns and knowledge from large datasets used in the pre-training process, making them useful for downstream tasks with limited data.

Further, the results were compared using the ROUGE-1, ROUGE-2 and ROUGE-L metrics.

Specifically, ROUGE-1 (Recall-Oriented Understudy for Gisting Evaluation-1) is a metric used to evaluate the quality of text summarization or machine translation. It measures the overlap between unigrams (individual words) in the reference summary (or translation) and the generated summary (or translation). The ROUGE-1 score ranges from 0 to 1, where 1 indicates perfect overlap between the reference summary and the generated summary in terms of unigrams.

ROUGE-2 is an evaluation metric used for automatic summarization tasks that measures the overlap of bigrams (i.e., sequences of two adjacent words) between the system-generated summary and the reference summary. It is similar to ROUGE-1, but instead of considering individual words, it looks at pairs of words in the summary and reference summary. The score is calculated as the number of overlapping bigrams divided by the total number of bigrams in the reference summary.

ROUGE-L is a metric for evaluating the quality of text summaries or translations. It stands for Recall-Oriented Understudy for Gisting Evaluation - Longest Common Subsequence, and it measures the longest common subsequence (LCS) between the summary and the reference text. The LCS is the longest sequence of words that appear in the same order in both the summary and reference text. ROUGE-L considers all such LCS sequences and takes their length into account to compute a weighted average of the F1 score. The ROUGE-L score gives more weight to long sequences of words that are similar in the summary and reference text, and it is often used as a more comprehensive evaluation metric than ROUGE-1 and ROUGE-2.

As seen in Table 2 below, the Precision, Recall and F1-Scores for the plurality of models were evaluated for the ROUGE-1, ROUGE-2 and ROUGE-L metrics.

**TABLE 2: Performance Comparison between models**

| | **Models** | **ROUGE-1** | **ROUGE-2** | **ROUGE-L** | **Average** |
|---|---|---|---|---|---|
| Precision | RoBERTa | 0.50 | 0.16 | 0.50 | 0.39 |
| | DistilBERT | 0.52 | 0.45 | 0.52 | 0.50 |
| | BERT | 0.56 | 0.45 | 0.50 | 0.50 |
| | AsmDocGen | 0.70 | 0.69 | 0.51 | 0.63 |
| Recall | RoBERTa | 0.36 | 0.16 | 0.37 | 0.30 |
| | DistilBERT | 0.47 | 0.30 | 0.47 | 0.41 |
| | BERT | 0.55 | 0.39 | 0.46 | 0.47 |
| | Asm DocGen | 0.70 | 0.56 | 0.48 | 0.58 |
| F1-Score | RoBERTa | 0.42 | 0.16 | 0.43 | 0.34 |
| | DistilBERT | 0.49 | 0.36 | 0.49 | 0.45 |
| | BERT | 0.55 | 0.43 | 0.48 | 0.49 |
| | Asm DocGen | 0.68 | 0.59 | 0.49 | 0.59 |

The given results in Table 2 show that, on average, AsmDocGen outperforms baseline models by 26%, 23%, and 20% in terms of precision, recall, and F1-score, respectively. This suggests that CodeBERT's pre-training objectives, which specifically target code and comment pairs, may provide an advantage for this task compared to models that were pre-trained on general language data. Additionally, the results of Table 2 highlight the importance of selecting a model that is well-suited to the task at hand rather than relying solely on pre-training size or architecture.

The results were also reviewed using a qualitative analysis. In particular, the results found three types of correct comments in terms of their similarity to the ground truth comments. These three types are: identical; partially similar; and contextually similar.

Identical comments include descriptions that include an exact set of words in the same order as the ground truth description. An example is shown in Table 3 below.

**TABLE 3: AsmDocGen's example exact matches**

| **Predicted Comment** | **Ground Truth** |
|---|---|
| find vertex number and edges out | find vertex number and edges out |
| perform subtraction then addition | perform subtraction then addition |
| perform multiple multiplication | perform multiple multiplication |

Partially similar comments are comments that are semantically similar to the ground truth but only include a subset of original words. An example is shown in Table 4 below.

**TABLE 4: AsmDocGen's example partially similar matches**

| **Predicted Comment** | **Ground Truth** |
|---|---|
| find unopened closing brackets | check too many closing brackets |
| find second thursday of sept | find second thursday of September 2013 |
| find partially paired brackets | find paired and nested brackets |

From the above, Table 4 shows some examples of partially similar generated comments. It provides a noteworthy example that showcases the learning capabilities of the model, going beyond mere pattern memorization. The table demonstrates how the model accurately comprehended the meaning of the words "unopened" and "closed" and produced correct predictions.

Contextually similar comments are comments that have different structures and wording from the ground truth but convey the relevant context or semantics. An example is shown in Table 5 below.

**TABLE 5: AsmDocGen's contextually similar examples**

| **Predicted Comment** | **Ground Truth** |
|---|---|
| returns the size of the queue | fuzzy compare operations |
| find last node | find edge destination |

Sometimes, the comments generated by the AsmDocGen model, as presented in Table 5, differ completely from the ground truth comments. This raises the question of whether these predictions are actually relevant to the code's functionality.

As shown in Table 5, AsmDocGen generated the comment "returns the size of the queue," whereas the ground truth comment is "fuzzy compare operations." Given that in a fuzzy system, a queue can be utilized to keep track of intermediate results or manage the sequence of various operations, the generated comment seems relevant. A manual examination of the code confirmed that this assembly code specifically uses a queue in a fuzzy system. Additionally, it is worth noting that while "Find edge destination" and "find last node" are not identical, they still convey similar concepts. "Find edge destination" is a specific term in graph theory, while "find last node" is a broader term that can apply to various structures like linked lists, trees, or graphs. These findings suggest that although AsmDocGen's comments may not be identical to the ground truth, they are still relevant to the code's functionalities.

From the above, a system and methods are provided that can produce understandable summaries or comments for assembly code, which is a form of machine code that is challenging for humans to comprehend without thorough analysis. The systems and methods utilize a pre-trained BERT mode (e.g. CodeBERT) to Transformer model to translate assembly code functions into human-readable comments. The performance of the model was evaluated using internal metrics, including BLEU scores, ROUGE-1, ROUGE-2, and ROUGE-L, which assess the similarity between the machine-generated comments and those written by humans.

Thus the methods and system provide for automatic code commenting for low level programming languages by using a transformer-based model.

### Example Hardware

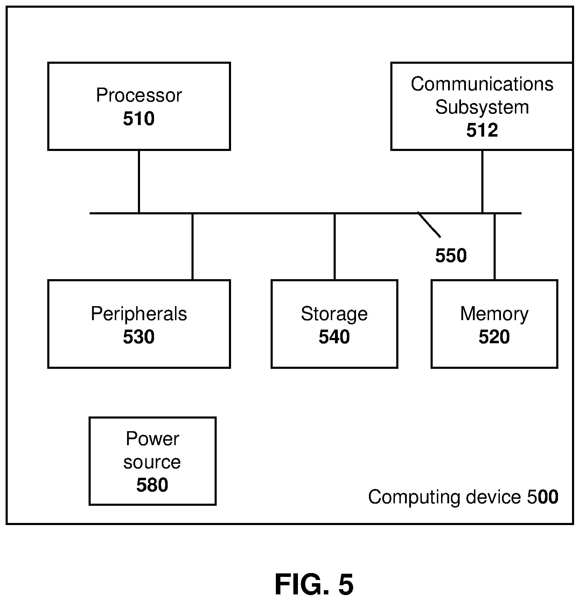

The above functionality may be implemented on any one or combination of computing devices. **Figure 5** is a block diagram of a computing device **500** that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, etc. The computing device **500** may comprise a central processing unit (CPU) or processor **510,** communications subsystem **512,** memory **520,** a mass storage device **540,** and peripherals **530.**

Peripherals **530** may comprise, amongst others one or more input/output devices, such as a speaker, microphone, mouse, touchscreen, keypad, keyboard, printer, display, network interfaces, and the like.

Communications between processor **510,** communications subsystem **512,** memory **520,** mass storage device **540,** and peripherals **530** may occur through one or more buses **550.** The bus **550** may be one or more of any type of several bus architectures including a memory bus or memory controller, a peripheral bus, video bus, or the like.

The processor **510** may comprise any type of electronic data processor. The memory **520** may comprise any type of system memory such as static random-access memory (SRAM), dynamic random access memory (DRAM), synchronous DRAM (SDRAM), read-only memory (ROM), a combination thereof, or the like. In an embodiment, the memory **520** may include ROM for use at boot-up, and DRAM for program and data storage for use while executing programs.

The mass storage device **540** may comprise any type of storage device configured to store data, programs, and other information and to make the data, programs, and other information accessible via the bus. The mass storage device **540** may comprise, for example, one or more of a solid-state drive, hard disk drive, a magnetic disk drive, an optical disk drive, or the like.

The computing device **500** may also include a communications subsystem **512,** which may include one or more network interfaces, which may comprise wired links, such as an Ethernet cable or the like, and/or wireless links to access nodes or different networks. The communications subsystem **512** allows the processing unit to communicate with remote units via the networks. For example, the communications subsystem **512** may provide wireless communication via one or more transmitters/transmit antennas and one or more receivers/receive antennas. In an embodiment, the processing unit is coupled to a local-area network or a wide-area network, for data processing and communications with remote devices, such as other processing units, the Internet, remote storage facilities, or the like.

Through the descriptions of the preceding embodiments, the teachings of the present disclosure may be implemented by using hardware only or by using a combination of software and hardware. Software or other computer executable instructions for implementing one or more embodiments, or one or more portions thereof, may be stored on any suitable computer readable storage medium. The computer readable storage medium may be a tangible or in transitory/non-transitory medium such as optical (e.g., CD, DVD, Blu-Ray, etc.), magnetic, hard disk, volatile or non-volatile, solid state, or any other type of storage medium known in the art.

## Claims

1. A method for creating a model to add a code summary to functions of assembly language code, the method comprising:
tokenizing (130) an assembly code dataset;
inputting the tokenized assembly code dataset to a pre-trained transformer-based model;
using an encoder (150; 420) to create fixed length embeddings; and
using a decoder (160; 440) on the fixed length embeddings to generate the code summary.

2. The method of claim 1, wherein the assembly code dataset comprises the functions of assembly language code (210, 220) and comment pairings (212, 222).

3. The method of claim 2, wherein the dataset is created by:
retrieving (120) source code with comment pairings;
compiling (122) the source code to create a binary output;
disassembling (122) the binary output to assembly language code; and
correlating (124) functions within the assembly language code and the source code to associate the comment pairings (212, 222) with the assembly language code (210, 220).

4. The method of any of the preceding claims further comprising training the pre-trained transformer-based model with a subset of the assembly code dataset and testing the model using a further subset of the assembly code dataset.

5. The method of any of the preceding claims wherein the pre-trained transformer-based model is a CodeBERT model.

6. The method of any of the preceding claims wherein the tokenizing is performed by a WordPiece tokenizer.

7. The method of any of the preceding claims wherein the fixed length embeddings are further created using padding and truncation.

8. The method of claim 7, wherein the fixed length is optimized for accuracy and model training time.

9. The method of any of the preceding claims, wherein each of the fixed length embeddings is a contextual vector representation of an input token.

10. A system (500) for creating a model to add a code summary to functions of assembly language code, the system comprising:
at least one processor (510); and
a memory (520) coupled to (550) the at least one processor and storing instructions that, when executed by the at least one processor, cause the system (500) to carry out the method of any preceding claim.

11. A computer program which, when executed on at least one processor of a system, is configured to cause the system to carry out the method of any one of claims 1 to 9.
